# EUROPEAN PATENT APPLICATION

(11) **EP 4 575 428 A1**
(43) Date of publication of application: **25.06.2025**
(21) Application number: 23217656.0
(22) Date of filing: 18.12.2023
(51) Int. Cl.: G01J 3/02, G01J 3/06, G01J 3/453, G01B 9/02

(54) **OPTICAL INTERFEROMETER AND SPECTROMETER SYSTEM**

(71) Applicant: trinamiX GmbH, 67063 Ludwigshafen am Rhein (DE)
(72) Inventor: Ostermann, Till-Jonas, 67063 Ludwigshafen am Rhein (DE)
(74) Representative: Altmann Stößel Dick Patentanwälte PartG mbB

(57) **Abstract**

An optical interferometer (110) is disclosed. The optical interferometer (110) comprises at least one beam splitting device (136) for splitting incident light into at least two illumination paths (114, 134); at least one moveable scanning mirror (112) in a first illumination path (114); at least one metal positioning element (116) fixedly connected to the scanning mirror (112); at least one stationary mirror (132) in a predefined, fixed position in a second illumination path (134); at least one inductive sensor (118) for generating at least one sensor signal according to a distance between the sensor (118) and the metal positioning element (116); at least one application-specific integrated circuit (ASIC) (122) for determining the position of the scanning mirror (112) from the at least one sensor signal generated by the inductive sensor (118).

Further disclosed are a spectrometer system (138) comprising the optical interferometer (110) and a use of the spectrometer system (138).

## Description

### Technical Field

The present invention refers to an optical interferometer, to a spectrometer system comprising the optical interferometer and to a use of the spectrometer system. The optical interferometer may, as an example, be used in spectroscopy systems, such as in Fourier-transform infrared spectroscopy systems, for investigating or monitoring purposes, for example, in the infrared spectral region, specifically in the near-infrared spectral region, and/or in the mid infrared spectral region. However, further applications are feasible.

### Background art

Optical interferometers, are widely used in research, industry and even customer applications, enabling multiple measurement applications, such as optical analysis and quality control. Such optical interferometers, specifically for customer applications, are generally available in portable format, such as for example in portable spectrometer devices and systems, enabling on the go measurements and thus improving user comfort and convenience. Typically, specifically in portable spectrometer devices, optical interferometers are built as micro-electromechanical systems and for example integrated into one single chip.

US 8,873,125 B2 describes a Micro Electro-Mechanical System (MEMS) interferometer system that utilizes a capacitive sensing circuit to determine the position of a moveable mirror. An electrostatic MEMS actuator is coupled to the moveable mirror to cause a displacement thereof. The capacitive sensing circuit senses the current capacitance of the MEMS actuator and determines the position of the moveable mirror based on the current capacitance of the MEMS actuator.

Despite the advantages achieved in the prior art, various technical challenges still remain. In particular, the electric field used for capacitive sensing typically increases the risk of unwanted interference with other and/or further components of the micro-electromechanical systems, thereby decreasing measurement reliability. However, due to the small built of micro-electromechanical systems, minimizing potential effective areas and/or ranges of force fields is generally desirable. Further, for achieving accurate measurement results, precise position detection of the mechanical parts of the optical interferometer, such as of one or more of mirrors, is desirable.

### Problem to be solved

It is therefore desirable to provide devices and systems, which at least partially address the above mentioned technical challenges. Specifically, an optical interferometer, a spectrometer system and a use of a spectrometer system shall be proposed, which allow for precisely controlled and reliable measurement performance.

### Summary

This problem is addressed by an optical interferometer, a spectrometer system comprising the optical interferometer and a use of the spectrometer system with the features of the independent claims. Advantageous embodiments which might be realized in an isolated fashion or in any arbitrary combinations are listed in the dependent claims as well as throughout the specification.

In a first aspect of the present invention, an optical interferometer is disclosed. The term "optical interferometer" as used herein is a broad term and is to be given its ordinary and customary meaning to a person of ordinary skill in the art and is not to be limited to a special or customized meaning. The term specifically may refer, without limitation, to an arbitrary device configured for extracting information, e.g. by performing one or more of determining, measuring and/or monitoring, at least one parameter, such as a least one of a physical parameter, a chemical parameter and/or a biological parameter, by using superposition and/or interference of light, specifically of light waves, e.g. light of the infrared spectral region, such as of the near-infrared spectral region, and/or the mid infrared spectral region. In particular, the optical interferometer may be configured for measuring at least one parameter by evaluating and/or analyzing an interference of light from a single source, wherein the interference may specifically be generated by bringing together a least two beams, e.g. light beams, previously split from a single light source and forced to travel different optical paths. As an example, the optical interferometer may be configured for measuring parameters, such as absorption or emission, associated with at least one substance or mixture, such as by analyzing an interference pattern, for example by comparing the interference pattern to a set of previously determined interference patterns, e.g. of a pattern data base or the like.

The optical interferometer comprises at least one beam splitting device for splitting incident light, specifically emitted by a light source, into at least two illumination paths. The term "beam splitting device" as used herein is a broad term and is to be given its ordinary and customary meaning to a person of ordinary skill in the art and is not to be limited to a special or customized meaning. The term specifically may refer, without limitation, to an optical component that separates a single beam of light into two partial beams. As an example, the beam splitting device may be configured for separating the single beam of light, such as the incident light, into two partial beams, i.e. following the two illumination paths, in a splitting ratio of 1:1, e.g. such that each split beam and/or partial beam is composed of 50% ± 5%, specifically of 50% ± 2%, of the intensity of the incident light.

The term "incident light" as used herein is a broad term and is to be given its ordinary and customary meaning to a person of ordinary skill in the art and is not to be limited to a special or customized meaning. The term specifically may refer, without limitation, to light emitted by an arbitrary illumination source and/or light source, such as a source providing sufficient emission of light in the infrared spectral range, especially in the near infrared spectral range and/or the mid infrared range.

The optical interferometer further comprises at least one moveable scanning mirror in a first illumination path. The term "scanning mirror" as used herein is a broad term and is to be given its ordinary and customary meaning to a person of ordinary skill in the art and is not to be limited to a special or customized meaning. The term specifically may refer, without limitation, to at least one moveable at least partially, specifically fully, reflective surface, configured for reflecting light, specifically the beam of light emitted by the illumination source, such as the split beam and/or partial beam of the light beam emitted by the light source.

The term "moveable" as used herein is a broad term and is to be given its ordinary and customary meaning to a person of ordinary skill in the art and is not to be limited to a special or customized meaning. The term specifically may refer, without limitation, to the property of at least one object of having its location changed over time, e.g. within a predefined limitation. As an example, the position and/or location of the moveable scanning mirror may be changeable and/or adaptable according to a predefined measurement setting, e.g. via at least one actuator, such as a movement actuator, i.e. driven by a motor.

The optical interferometer further comprises at least one metal positioning element fixedly connected to the scanning mirror. The term "positioning element" as used herein is a broad term and is to be given its ordinary and customary meaning to a person of ordinary skill in the art and is not to be limited to a special or customized meaning. The term specifically may refer, without limitation, to an arbitrary object and/or element configured for making a position of another object and/or element detectable. In particular, the positioning element, by being fixedly connected to the scanning mirror, for example by one or more adhesive and/or mechanical connections, may be configured for making the position of the scanning mirror detectable by the inductive sensor. In particular, the positioning element is a metal element and may thus be at least partially made of metal, for example of ferromagnetic materials, e.g. comprising one or more of iron, steel, cobalt and nickel.

The optical interferometer further comprises at least one stationary mirror in a predefined, fixed position in a second illumination path. The term "stationary" as used herein is a broad term and is to be given its ordinary and customary meaning to a person of ordinary skill in the art and is not to be limited to a special or customized meaning. The term specifically may refer, without limitation, to the property of at least one object and/or element of not changing its location and/or position with regard to at least one other object and/or element. As an example, the stationary mirror may have a fixed position and/or orientation, e.g. with respect to one or more of the beam splitting device and/or the light source. As an example, the stationary mirror may be fixedly mounted to and/or on at least one holder, such as to a base and/or housing of the optical interferometer.

The optical interferometer further comprises at least one inductive sensor for generating at least one sensor signal according to a distance between the sensor and the metal positioning element. The term "inductive sensor" as used herein is a broad term and is to be given its ordinary and customary meaning to a person of ordinary skill in the art and is not to be limited to a special or customized meaning. The term specifically may refer, without limitation, to an arbitrary a device and/or object using the principle of electromagnetic induction for detecting and/or measuring objects, such as an object's position. Specifically, the inductive sensor may be or may comprise at least one electric coil and may be configured for detecting and/or measuring an object's position and/or distance to the coil based on an electric current and/or change in the electric current in reaction to a magnetic field, e.g. induced by the presence or absence of a metal object, e.g. of the metal positioning element, in the coil. In particular, the inductive sensor may be a non-contact sensor, such as a non-contact proximity sensor, e.g. a non-contact electronic proximity sensor. In particular, the inductive sensor may be configured for generating at least one sensor signal according to the position of the metal object, such as of the metal positioning element, e.g. in form of an electric signal, for example the electric current induced inn the coil.

In particular, the coil, e.g. an LC tank, may change its characteristics, such as energy decay and/or resonant frequency, based on the closeness of the metal positioning element, e.g. a metal plate, which is connected to the scanning mirror. The change in the characteristics can be precisely measured, thereby, for example, allowing precise information on the position of the metal positioning element, e.g. the plate, and thus also of the scanning mirror connected to the metal positioning element. This way, for example, a precise determination of the position of the mirror may be possible.

The optical interferometer further comprises at least one application-specific integrated circuit (ASIC) for determining the position of the scanning mirror from the at least one sensor signal generated by the inductive sensor. In particular, the ASIC may be used for calculating from the inductive sensor signal, the position of the scanning mirror connected to the metal positioning element.

The movement of the scanning mirror may specifically be restricted to a predefined range along a straight line. As an example, the predefined range, e.g. also referred to as predefined movement range, may be a pre-set distance along the straight line. The straight line may be or may comprise one or more of a straight line through the beam splitting device and a detector device and a straight line through the beam splitting device and a light source emitting the incident light. Specifically, the straight line may be arranged perpendicular and/or in an orthogonal fashion to the reflective surface of the scanning mirror. Thus, as an example the straight line may be a normal to, such as a straight line parallel to a normal vector of, the reflective surface of the scanning mirror.

The optical interferometer may further comprise at least one actuator for actively moving the scanning mirror in the predefined range along the straight line. Specifically, the actuator may be configured for moving the scanning mirror backwards and/or forwards on and/or along the straight line. For this purpose, the actuator may for example comprise at least one motor or may be driven by the at least one motor, such as by an electric motor.

The predefined movement range, such as the predefined range along which the scanning mirror may be moved, may have a maximum length in the range of from 0.1 mm to 5 mm. Specifically, the predefined movement range may have a maximum length in the range of from 0.1 mm to 1 mm.

The scanning mirror in at least one position may for example be arranged in a direct line between the inductive sensor and the beam splitting device. As an example, the scanning mirror in each of its possible positions, may be arranged in the direct line between the inductive sensor and the beam splitting device.

The scanning mirror and the metal positioning element may be fixedly connected via at least one rod element. As an example, the rod element may at least partially have one or more of a beam-like, elongated shape and a short, compact shape. The scanning mirror, the metal positioning element and the rod element, specifically in conjunction and from a side perspective, may have one or more of a v-shape and a u-shape. As an example, in case the metal positioning element and the rod element have a u-shape, the rod element may have the beam-like, elongated shape. Alternatively, wherein in case the in case the metal positioning element and the rod element have a v-shape, the rod element may have the short and compact shape. Other shapes, such as an s-shape or an L-shape, are also feasible.

The inductive sensor may for example be arranged between the scanning mirror and the metal positioning element. Specifically, the inductive sensor may be arranged such that the scanning mirror is arranged on one side of the inductive sensor and the metal positioning element may be arranged on another side of the inductive sensor. In particular, the scanning mirror and the metal positioning element may for example be positioned on opposing sides of the inductive sensor.

The actuator may specifically be arranged at least partially between the scanning mirror and the metal positioning element. Thus, as an example, the actuator may at least partially be positioned in an area between the scanning mirror and the metal positioning element.

The optical interferometer may, for example, be implemented as a micro-electromechanical system. The term "micro-electromechanical system" as used herein is a broad term and is to be given its ordinary and customary meaning to a person of ordinary skill in the art and is not to be limited to a special or customized meaning. The term specifically may refer, without limitation, to a microscopic device incorporating both electronic and moving parts. In particular, the optical interferometer implemented and/or built as a micro-mechanical system, may have a maximum length in at least one dimension in the range of from 0.02 mm to 1.0 mm.

The optical interferometer may specifically be or may comprises a Michelson interferometer.

In a further aspect of the present invention, a spectrometer system is disclosed. The spectrometer system comprises at least one spectrometer device comprising at least one detector device.

Further, the spectrometer system comprises at least one optical interferometer and at least one light source arranged such that light emitted by the light source illuminates the spectrometer device at least partially through the at least one optical interferometer. The optical interferometer is an optical interferometer as disclosed herein. Thus, for possible definitions and possible embodiments of the optical interferometer or parts thereof, reference is made to the definitions and embodiments as described herein with respect to the optical interferometer.

The term "spectrometer system" as used herein is a broad term and is to be given its ordinary and customary meaning to a person of ordinary skill in the art and is not to be limited to a special or customized meaning. The term specifically may refer, without limitation, to a set of interacting or interdependent components and/or parts forming a whole, which is capable of optically analyzing at least one sample, thereby generating information on at least one spectral property of the sample. Specifically, the spectrometer system may refer to a set, which is capable of recording a signal intensity with respect to a corresponding wavelength of a spectrum or a partition thereof, such as a wavelength interval, wherein the signal intensity may be provided as an electrical signal, e.g. by the detector device, which may be used for further evaluation.

The term "detector device" as used herein is a broad term and is to be given its ordinary and customary meaning to a person of ordinary skill in the art and is not to be limited to a special or customized meaning. The term specifically may refer, without limitation, to a pixelated sensor and/or a pixelated optical sensor comprising a plurality of individual pixel sensors, also referred to as "pixel", wherein each pixel sensor may have at least a photosensitive area which is adapted to generate an electrical signal depending on the intensity of the light illuminating and/or impinging on the pixel sensor. As an example, the detector device may be a detector array comprising an array of photosensitive elements.

The spectrometer system may further comprise at least one housing having at least one optically transparent window. As an example, the housing may be configured to at least partially enclose the spectrometer device, the optical interferometer and the light source.

The light source, e.g. the light source emitting the incident light, may be or may comprise at least one laser. Specifically, the light source may be or may comprise a laser diode, although further types of lasers can also be used.

The spectrometer system may specifically be a handheld spectrometer system. The term "handheld" as used herein is a broad term and is to be given its ordinary and customary meaning to a person of ordinary skill in the art and is not to be limited to a special or customized meaning. The term specifically may refer, without limitation, to a property of an arbitrary object to be portable. Thus, the handheld spectrometer device, specifically by its dimensions and/or its weight, be configured for being carried by a user with a single hand. Thus, as an example, a volume of the handheld spectrometer system may not exceed 0.001 m³, and/or the weight of the handheld spectrometer device may not exceed 11 kg.

The spectrometer system may specifically be or may comprise a Fourier-transform infrared (FTIR) spectroscopy system.

In a further aspect of the present invention, a use of a spectrometer system according to the present invention is disclosed. Specifically, the use of the spectrometer system for a purpose of determining information related to a spectrum of an object, such as of a sample, is proposed. In particular, the spectrometer system is, preferably, be used for one or more applications, such as for a purpose of use, selected from the group consisting of: an infrared detection application; a spectroscopy application; an exhaust gas monitoring application; a combustion process monitoring application; a pollution monitoring application; an industrial process monitoring application; a mixing or blending process monitoring; a chemical process monitoring application; a food processing process monitoring application; a food preparation process monitoring; a water quality monitoring application; an air quality monitoring application; a quality control application; a temperature control application; a motion control application; an exhaust control application; a gas sensing application; a gas analytics application; a motion sensing application; a chemical sensing application; a mobile application; a medical application; a mobile spectroscopy application; a food analysis application; an agricultural application, in particular characterization of soil, silage, feed, crop or produce, monitoring plant health; a plastics identification and/or recycling application. Further applications are feasible.

The above-described optical interferometer, the spectrometer system and the proposed uses have considerable advantages over the prior art. Thus, generally, an optical interferometer and a spectrometer system are provided, which allow precisely controlled and reliable measurements. As a particular advantage, a precise mirror position can be measured in the optical interferometer, specifically applied and/or used in the spectrometer system, e.g. in an FTIR system. Specifically, the inductive sensing, e.g. by the inductive sensor of the proposed optical interferometer, may achieve higher sensitivity than capacitive sensing because the inductance of a coil changes more with displacement than the capacitance of a capacitor.

Further, the proposed optical interferometer and spectrometer system, by using the inductive sensor, may be less sensitive to dielectric properties of the material being sensed than capacitive sensing, and thus less prone to error and/or failure than known devices and systems. This may be of particular advantage in case a structure of the micro-electromechanical system requires a material with high dielectric constants within close distance to the scanning mirror, e.g. close by, such as for example one or more capacitors or the like.

In addition, the proposed optical interferometer and spectrometer system, by using the inductive sensor, may have a larger sensing range than known devices and systems of a similar kind. In particular, the inductive sensor may achieve larger sensing ranges than for example capacitive sensing, since the magnetic field used in inductive sensing can penetrate further than the electric field used in capacitive sensing.

Furthermore, and dependent on the application specific usage, the proposed optical interferometer and spectrometer system, by using the inductive sensor, may yield lower power consumption and may thus be more efficient and sustainable than known devices and systems of a similar kind.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, non-withstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Summarizing and without excluding further possible embodiments, the following embodiments may be envisaged:
Embodiment 1. An optical interferometer comprising
   - at least one beam splitting device for splitting incident light, specifically emitted by a light source, into at least two illumination paths,
   - at least one moveable scanning mirror in a first illumination path,
   - at least one metal positioning element fixedly connected to the scanning mirror,
   - at least one stationary mirror in a predefined, fixed position in a second illumination path,
   - at least one inductive sensor for generating at least one sensor signal according to a distance between the sensor and the metal positioning element,
   - at least one application-specific integrated circuit (ASIC) for determining the position of the scanning mirror from the at least one sensor signal generated by the inductive sensor.
Embodiment 2. The optical interferometer according to the preceding embodiment, wherein the movement of the scanning mirror is restricted to a predefined range, e.g. also referred to as predefined movement range, along a straight line.
Embodiment 3. The optical interferometer according to the preceding embodiment, wherein the straight line is one or more of a straight line through the beam splitting device and a detector device and a straight line through the beam splitting device and a light source emitting the incident light.
Embodiment 4. The optical interferometer according to any one of the two preceding embodiments, wherein the optical interferometer further comprises at least one actuator for actively moving the scanning mirror in the predefined range along the straight line, specifically backwards and/or forwards on the straight line.
Embodiment 5. The optical interferometer according to any one of the three preceding embodiments, wherein the predefined movement range has a maximum length in the range of from 0.1 mm to 5 mm, specifically in the range of from 0.1 mm to 1 mm.
Embodiment 6. The optical interferometer according to any one of the preceding embodiments, wherein the scanning mirror in at least one position is arranged in a direct line between the inductive sensor and the beam splitting device.
Embodiment 7. The optical interferometer according to the preceding embodiment, wherein the scanning mirror in each of its possible positions, is arranged in the direct line between the inductive sensor and the beam splitting device.
Embodiment 8. The optical interferometer according to any one of the preceding embodiments, wherein the scanning mirror and the metal positioning element are fixedly connected via at least one rod element.
Embodiment 9. The optical interferometer according to the preceding embodiment, wherein the scanning mirror, the metal positioning element and the rod element have one or more of a v-shape and a u-shape.
Embodiment 10. The optical interferometer according to any one of the two preceding embodiments, wherein the inductive sensor is arranged between the scanning mirror and the metal positioning element.
Embodiment 11. The optical interferometer according to any one of the three preceding embodiments, wherein the scanning mirror and the metal positioning element are positioned on opposing sides of the inductive sensor.
Embodiment 12. The optical interferometer according to any one of the four preceding embodiments and according to embodiment 4, wherein the actuator is arranged at least partially between the scanning mirror and the metal positioning element.
Embodiment 13. The optical interferometer according to any one of the preceding embodiments, wherein the optical interferometer comprises a Michelson interferometer.
Embodiment 14. A spectrometer system comprising at least one spectrometer device comprising at least one detector device, at least one optical interferometer and at least one light source arranged such that light emitted by the light source illuminates the spectrometer device at least partially through the at least one optical interferometer, wherein the optical interferometer is an optical interferometer according to any one of the preceding embodiments.
Embodiment 15. The spectrometer system according to the preceding embodiment, wherein the spectrometer system comprises at least one housing having at least one optically transparent window and wherein the housing is configured to at least partially enclose the spectrometer device, the optical interferometer and the light source.
Embodiment 16. The spectrometer system according to any one of the two preceding embodiments, wherein the light source comprises at least one laser.
Embodiment 17. The spectrometer system according to any one of the three preceding embodiments, wherein the detector device is a detector array comprising an array of photosensitive elements.
Embodiment 18. The spectrometer system according to any one of the four preceding embodiments, wherein the spectrometer system is a handheld spectrometer system.
Embodiment 19. The spectrometer system according to any one of the five preceding embodiments, wherein the spectrometer system is a Fourier-transform infrared (FTIR) spectroscopy system.
Embodiment 20. A use of the spectrometer system according to any one of the preceding embodiments referring to a spectrometer system, for one or more applications selected from the group consisting of: an infrared detection application; a spectroscopy application; an exhaust gas monitoring application; a combustion process monitoring application; a pollution monitoring application; an industrial process monitoring application; a mixing or blending process monitoring; a chemical process monitoring application; a food processing process monitoring application; a food preparation process monitoring; a water quality monitoring application; an air quality monitoring application; a quality control application; a temperature control application; a motion control application; an exhaust control application; a gas sensing application; a gas analytics application; a motion sensing application; a chemical sensing application; a mobile application; a medical application; a mobile spectroscopy application; a food analysis application; an agricultural application, in particular characterization of soil, silage, feed, crop or produce, monitoring plant health; a plastics identification and/or recycling application.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a part of an optical interferometer in a schematic side view; and
- Figures 2: shows different embodiments of spectrometer systems comprising an optical interferometer in a schematic side view.

### Detailed description of the embodiments

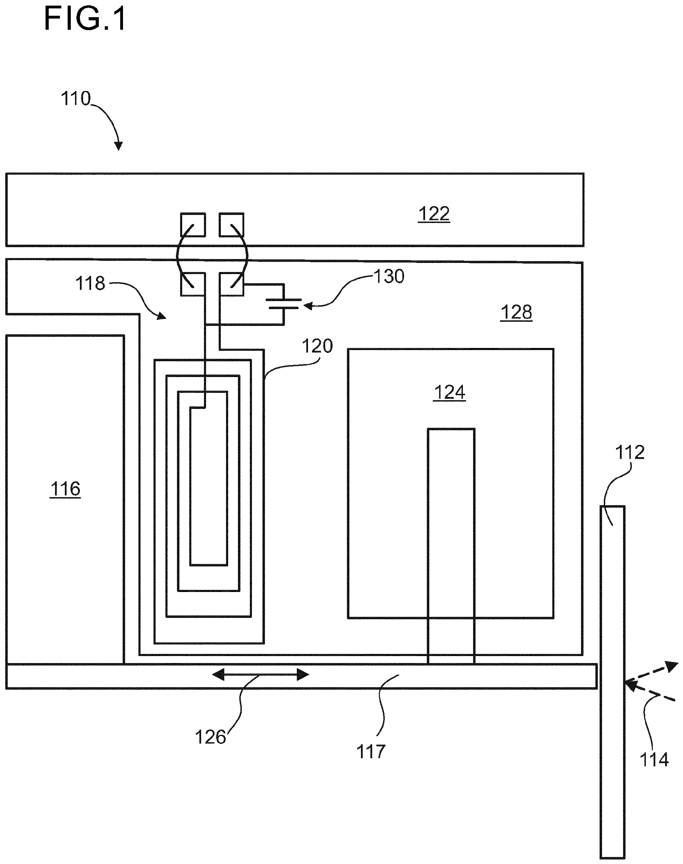

In Figure 1, an embodiment of a part of an optical interferometer 110 is illustrated in a schematic side view. The optical interferometer 110 comprises at least one movable scanning mirror 112 in a first illumination path 114. Further, the optical interferometer 110 comprises at least one metal positioning element 116 fixedly connected to the scanning mirror 112, e.g. via at least one rod element 117. The optical interferometer 110 further comprises at least one inductive sensor 118, e.g. comprising at least one coil 120, for generating at least one sensor signal according to a distance between the sensor 118 and the metal positioning element 116. Furthermore, the optical interferometer 110 comprises at least one ASIC 122 for determining the position of the scanning mirror 112 from the at least one sensor signal generated by the inductive sensor 118.

Furthermore, the optical interferometer 110 may comprise at least one actuator 124 for actively moving the scanning mirror 112 in a predefined range along a straight line, wherein in figure 1, the predefined range is excellent clearly illustrated by arrow 126. As an example, the actuator 124 may indirectly move the scanning mirror 112, specifically along the straight line, via a further element connected to the scanning mirror 112, e.g. via the rod element 117.

In particular, the optical interferometer 110 may be fully or partially integrated into one single chip, e.g. at least some of its components, for example the inductive sensor 118 with its at least one coil 120 and one or more capacitors 130 as well as the actuator 124, may be arranged on one single substrate 128, as exemplarily illustrated in Figure 1. However, some of the components of the inductive sensor 118, such as the capacitor 130, may also be arranged elsewhere, such as off chip.

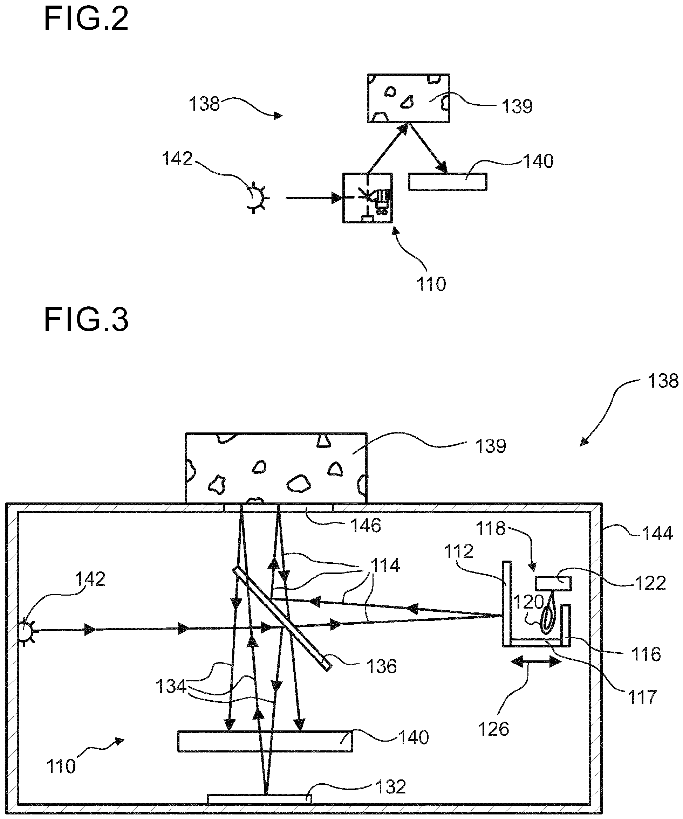

The optical interferometer 110 further comprises at least one stationary mirror 132 in a predefined, fixed position in a second illumination path 134. In addition, the optical interferometer 110 comprises at least one beam splitting device 136 for splitting incident light into the at least two elimination paths 114 and 134. This setup is exemplarily illustrated in Figure 3 showing an embodiment of a spectrometer system 138 comprising the optical interferometer 110.

Another embodiment of the spectrometer system 138 is illustrated in Figure 2. In particular, the spectrometer system 138 may be capable of optically analyzing at least one sample 139, e.g. generating information on at least one spectral property of the sample 139. The spectrometer system 138, besides the optical interferometer 110, comprises at least one spectrometer device having at least one detector device 140. Further, the spectrometer system 138 comprises at least one light source 142, for example at least one laser, arranged, such that the light emitted by the light source 142 illuminates the spectrometer device, i.e. the detector device 140, at least partially through the at least one optical interferometer 110.

The spectrometer system 138, as exemplarily illustrated in figure 3, may further comprise at least one housing 144 having at least one optically transparent entrance window 146. The housing 144 may specifically be configured for at least partially enclosing the spectrometer device, e.g. the optical detector 140, the optical interferometer 110 and the light source 142.

### List of reference numbers

- 110: optical interferometer
- 112: scanning mirror
- 114: first illumination path
- 116: metal positioning element
- 117: rod element
- 118: inductive sensor
- 120: coil
- 122: ASIC
- 124: actuator
- 126: arrow
- 128: substrate
- 130: capacitor
- 132: stationary mirror
- 134: second illumination path
- 136: beam splitting device
- 138: spectrometer system
- 139: sample
- 140: detector device
- 142: light source
- 144: housing
- 146: optically transparent window

## Claims

1. An optical interferometer (110) comprising
- at least one beam splitting device (136) for splitting incident light into at least two illumination paths (114, 134),
- at least one moveable scanning mirror (112) in a first illumination path (114),
- at least one metal positioning element (116) fixedly connected to the scanning mirror (112),
- at least one stationary mirror (132) in a predefined, fixed position in a second illumination path (134),
- at least one inductive sensor (118) for generating at least one sensor signal according to a distance between the sensor (118) and the metal positioning element (116),
- at least one application-specific integrated circuit (ASIC) (122) for determining the position of the scanning mirror (112) from the at least one sensor signal generated by the inductive sensor (118).

2. The optical interferometer (110) according to the preceding claim, wherein the movement of the scanning mirror (112) is restricted to a predefined range along a straight line.

3. The optical interferometer (110) according to the preceding claim, wherein the straight line is one or more of a straight line through the beam splitting device (136) and a detector device and a straight line through the beam splitting device and a light source emitting the incident light.

4. The optical interferometer according to any one of the two preceding claims, wherein the optical interferometer (110) further comprises at least one actuator (124) for actively moving the scanning mirror (112) in the predefined range along the straight line.

5. The optical interferometer (110) according to any one of the three preceding claims, wherein the predefined movement range has a maximum length in the range of from 0.1 mm to 5 mm.

6. The optical interferometer (110) according to any one of the preceding claims, wherein the scanning mirror (112) in at least one position is arranged in a direct line between the inductive sensor (118) and the beam splitting device (136).

7. The optical interferometer (110) according to the preceding claim, wherein the scanning mirror (112) in each of its possible positions, is arranged in the direct line between the inductive sensor (118) and the beam splitting device (136).

8. The optical interferometer (110) according to any one of the preceding claims, wherein the scanning mirror (112) and the metal positioning element (116) are fixedly connected via at least one rod element (117).

9. The optical interferometer (110) according to the preceding claim, wherein the scanning mirror (112), the metal positioning element (116) and the rod element (117) have one or more of a v-shape and a u-shape.

10. The optical interferometer (110) according to any one of the two preceding claims, wherein the inductive sensor (118) is arranged between the scanning mirror (112) and the metal positioning element (116).

11. The optical interferometer according to any one of the three preceding claims, wherein the scanning mirror (112) and the metal positioning element (116) are positioned on opposing sides of the inductive sensor (118).

12. The optical interferometer (110) according to any one of the four preceding claims and according to claim 4, wherein the actuator (124) is arranged at least partially between the scanning mirror (112) and the metal positioning element (116).

13. The optical interferometer (112) according to any one of the preceding claims, wherein the optical interferometer (112) comprises a Michelson interferometer.

14. A spectrometer system (138) comprising at least one spectrometer device comprising at least one detector device (140), at least one optical interferometer (110) and at least one light source (142) arranged such that light emitted by the light source (142) illuminates the spectrometer device at least partially through the at least one optical interferometer (110), wherein the optical interferometer (110) is an optical interferometer (110) according to any one of the preceding claims.

15. A use of the spectrometer system (138) according to the preceding claim, for one or more applications selected from the group consisting of: an infrared detection application; a spectroscopy application; an exhaust gas monitoring application; a combustion process monitoring application; a pollution monitoring application; an industrial process monitoring application; a mixing or blending process monitoring; a chemical process monitoring application; a food processing process monitoring application; a food preparation process monitoring; a water quality monitoring application; an air quality monitoring application; a quality control application; a temperature control application; a motion control application; an exhaust control application; a gas sensing application; a gas analytics application; a motion sensing application; a chemical sensing application; a mobile application; a medical application; a mobile spectroscopy application; a food analysis application; an agricultural application, in particular characterization of soil, silage, feed, crop or produce, monitoring plant health; a plastics identification and/or recycling application.
